# EUROPÄISCHE PATENTSCHRIFT

(11) **EP 1 210 223 B1**
(45) Veröffentlichungstag und Bekanntmachung des Hinweises auf die Patenterteilung: **29.01.2003**
(21) Anmeldenummer: 00967554.7
(22) Anmeldetag: 11.09.2000
(51) Int. Cl.: B29D 11/00, B29C 47/88, B29C 43/22

(54) **VERFAHREN ZUR KONTINUIERLICHEN HERSTELLUNG VON ENDLOSEN, OPTISCH ABBILDUNGSFÄHIGEN FOLIEN, BAHNEN UND PLATTEN AUS KUNSTSTOFFEN UND EINRICHTUNG ZUR AUSÜBUNG DES VERFAHRENS**
METHOD FOR THE CONTINUOUS PRODUCTION OF CONTINUOUS FILMS, WEBS AND SHEETS WHICH CONSIST OF PLASTICS AND WHICH ARE CAPABLE OF FORMING OPTICAL IMAGES, AND DEVICE FOR CARRYING OUT THIS METHOD
PROCEDE DE PRODUCTION CONTINUE DE FILMS, DE BANDES OU DE PLAQUES CONTINUS EN MATIERE PLASTIQUE CAPABLES DE PRODUIRE DES IMAGES ET DISPOSITIF PERMETTANT DE METTRE EN OEUVRE CE PROCEDE

(30) Priorität: 11.09.1999 DE 19943604
(43) Veröffentlichungstag der Anmeldung: 05.06.2002
(73) Patentinhaber: Heinrich Friedrich Schröder, 22397 Hamburg (DE)
(72) Erfinder: NAWRATH, Peter, D-42853 Remscheid (DE)
(74) Vertreter: Füssel, Michael
(86) Internationale Anmeldenummer: DE0003149
(87) Internationale Veröffentlichungsnummer: WO01019600

(56) Entgegenhaltungen:
- WO-A-99/22931
- DE-A- 3 505 055
- DE-A- 19 900 381
- US-A- 4 486 363
- US-A- 5 770 122

## Beschreibung

Die Erfindung betrifft ein Verfahren zur kontinuierlichen Herstellung optisch abbildungsfähiger Folien, Bahnen und Platten nach Oberbegriff des Hauptanspruchs und Vorrichtungen zur Durchführung des Verfahrens.

Optisch abbildungsfähige Kunststoffprodukte wie Linsen aller Art, einschließlich total reflektierender, transparenter Prismenplatten und Retroreflektoren aus transparenten Kunststoffen, insbesondere aus PMMA, werden, abgesehen vom Filmgießverfahren, vornehmlich diskontinuierlich auf dem Spritzwege oder im Preßverfahren hergestellt. Der Anwendungsbereich der entsprechenden Produkte ist durch die Parameter der Herstellungsverfahren und Einrichtungen derselben beschränkt. Die Forderungen des Marktes, insbesondere im Bereich der Lichtlenk- und Solartechnik richten sich auf große Flächenprodukte in Dimensionen, die beispielsweise bei Flachglas verfügbar sind. Die Erfüllung dieser Forderung ist Zweck der Erfindung.

Die technisch durchführbare Herstellung großer Flächenprodukte im Gießverfahren, beispielsweise aus niedrig viskosen Lösungen, beispielsweise PMMA ist, abgesehen vom für den genannten Markt nicht oder nur bedingt verwendbaren Filmguß, wirtschaftlich ohne Bedeutung. Die Möglichkeit, optisch abbildungsfähige Flachprofile endlos zu extrudieren, ist bei groben Abmessungen und Querschnitten der Produkte gegeben, jedoch ist deren optische Qualität nur zur Verwendung bei Diffuseren für Beleuchtungszwecke geeignet. Dieses Prädikat trifft auch das endlos, nach der US-PS 5,656,209 gefertigte Produkt, welches eine lineare prismenstrukturierte Oberfläche besitzt, deren Kanten und Flächen genauso unscharf und verzogen sind wie bei den prismenprofilierten Extruderprodukten.

Mit kalt- oder heißprägenden Rollverfahren lassen sich nur in knetbaren Stoffen scharfkantige Prägungen durchführen. Eine scharfkantige Profilierung einer Kunststofffolie in einem Kalander ist bei An- wie bei Abwesenheit von Wärme ohne erfinderische Maßnahmen aus physikalischen Gründen nicht möglich, denn die Oberflächenspannung einer warm-weichplastischen Kunststofffolie verhindert auch bei den stärksten Druckstufen die Ausfüllung der scharfkantigen Täler einer entsprechend gravierten Formwalze, abgesehen davon, daß die im Walzenspalt traktierte niedrigviskose Schmelze hinter demselben im Erstarrungsprozeß aus den scharfen Kanten zurück kriecht (Kontraktion).

Bei der Entwicklung des Vulkanisierens von endlosen Gummibändern im Kalanderverfahren stellte sich die Aufgabe, den Rohkautschuk im Walzenspalt zu einem Band zu kalibrieren und den Vulkanisationsprozeß durch Wärme zu vollziehen, deren Einwirkung von einem Zeitparameter abhängig ist. Dabei mußte das kalibrierte, im Vulkanisationsprozeß sich befindende Rohkautschukband auf der beheizten Walze des Kalanders mitgeführt werden, und diese Forderung wurde mit einem, die beheizte Kalanderwalze teilweise umschlingenden Stahlband in der Weise erfüllt, indem sich der Rohkautschuk zwischen der beheizten Walze und dem diese teilweise umschlingenden Stahlband auf dem Weg vom kalibrierenden Walzenspalt bis zur Umlenkung des Stahlbandes ausvulkanisieren konnte. Es lag nahe, mit einem extrudierten Runststoffband in gleicher Weise zu verfahren, um darauf formgetreue Abbildungen einer gravierten Kalanderwalze herzustellen. In der Patentliteratur finden sich verschiedene Vorschläge zur Durchführung solcher Verfahren. In der US-PS 2,442,443 ist eine Kalandereinrichtung mit der Verwendung von zwei die Kalanderwalze umschlingenden, endlosen Stahlbändern beschrieben, die zunächst nur zur Glättung der herzustellenden Kunststofffolie dienen sollen. In der EP 0 799 686 A1 ist ein Verfahren zur endlosen Herstellung optischer Produkte und eine Einrichtung zur Ausübung des Verfahrens beschrieben, ebenso in der US-PS 4,486,363. In diesen Schriften und dem in der DE 35 05 055 A1 bekanntgemachten Verfahren, wie auch in der DE 41 10 248 A1, ist die Anwendung eines die Formwalze teilweise umschlingenden, endlosen Stahlbandes der primäre Bezugspunkt des jeweiligen, erfinderischen Gedankens. Doch bei den vielen Anwendungsvarianten desselben blieben die Ergebnisse unbefriedigend, insbesondere die Wirtschaftlichkeit der jeweiligen Verfahren und Einrichtungen zur Ausübung derselben betreffend, denn ohne eine optimale wirtschaftliche Temperatursteuerung der an der Formgebung der Produktoberflächen beteiligten Komponenten der Einrichtung zur Ausübung der bekannten Verfahren ist mit der Verwendung eines endlosen Stahlbandes allein kein Fortschritt bei der Herstellung optisch abbildungsfähiger Folien, Bahnen und Platten aus transparenten Plasten zu bewirken.

Die optische Qualität der nach den vorgeschlagenen Verfahren hergestellten Produkte und die Vorrichtungen zur Durchführung derselben sind durchweg in der gleichen Hinsicht unbefriedigend wie die der extrudierten Produkte wie auch die optische Qualität der nach dem Verfahren der US-PS 5,656,209 hergestellten Produkte. Die Schärfe der Außenkanten der Prismen ist durchweg rund, indessen die Innenkanten scharf ausgebildet sind. Hierbei wurden auch Kühlsysteme und Kühleinrichtungen von Kalanderwalzen, beispielsweise gemäß der DE 196 35 845 C1 wie auch gemäß der DE 41 16 068 C2 in Betracht gezogen und es wurde festgestellt, daß diese zur Lösung der der Erfindung zugrundeliegenden Aufgabe, nämlich unter anderem eine formgebende Kalanderwalze zu entwickeln, deren Oberfläche bei jeder Umdrehung ein Temperaturgefälle ohne unwirtschaftliche Energievernichtung zu durchwandern hat, keine Lehre enthielten.

Entsprechend dem zu erhöhenden Stande der Technik lag der Erfindung die Aufgabe zugrunde, eine fließende, in einem Extruder oder Heizraum flächig vorgeformte Kunststoffschmelze in die optischen Strukturen einer entsprechend gravierten Kalanderwalze einzubringen und dieselbe darin, die Gravur exakt abformend, dergestalt in den Erstarrungszustand zu bringen, daß sie, ein flaches Produkt bildend, von der gravierten Kalanderwalze fortlaufend abzunehmen ist.

Die Lösung der der Erfindung zugrundeliegenden Aufgabe lag zunächst im Rückgriff auf das gängige Verfahren der Herstellung hochwertiger Fresnellinsen im Preßverfahren. Bei dessen Entwicklung hat sich erwiesen, daß beispielsweise eine gegossene oder extrudierte, zwischen einer Spiegelplatte und einer Fresnelmatrize zur Schmelze erwärmten PMMA-Platte auch bei der Anwendung maximalen Druckes keine kantenscharfe Abbildung der tiefliegenden Kanten der Fresnelmatrize erbrachte. Die Oberfläche der vorgefertigten PMMA-Platte besitzt mithin eine, bei ihrem Herstellungsprozeß erhaltene Eigenschaft, die sich dem Materialfluß im Mikrobereich verweigert, denn die Verwendung von pulverisiertem PMMA anstelle der vorgefertigten PMMA-Platte führt bei Anwesenheit von Wärme und Druck zur vollkommenen Abbildung der Fresnelmatrize und damit zu einem hochwertigen, optischen Gegenstand. Die in diesem Vorgang gefundene Lehre wurde Teil der Lösung der der Erfindung zugrundeliegenden Aufgabe, und zwar durch die Maßnahme, eine aus der Breitschlitzdüse eines Extruders oder aus einer Heizkammer austretende niedrigviskose Schmelze unmittelbar in den Walzenspalt des Kalanders, d. h. zwischen die zylinderwalze und dem, diese teilweise umschlingenden Stahlband einzubringen.

Es gilt, eine Reaktion der Schmelzenoberfläche mit Luft zu verhindern. Bei Eintritt der Schmelze in den Walzenspalt soll darin eine, für den Kunststoff höchstzulässige Wärme vorherrschen, die zum Ausgang der Umschlingungsstrecke des Stahlbandes kontrolliert abgebaut wird, und zwar in der Weise, daß die in den spitzen Tälern der formgebenden Walze eingebrachte Schmelze eher in einen hartelastischen Zustand gelangt als die glatte Rückseite.

Beim Austritt der kontrolliert erstarrten Schmelze ist eine Abbiegung des gefestigten Bandes um eine Ablaufwalze nur in dem Maße zulässig, als es der Elastizitätskoeffizient des erstarrten Kunststoffes zuläßt. Die Differenz zwischen dem Durchmesser der Ablaufwalze und dem Durchmesser der Außenseite des darauf transportierten Kunststoffbandes darf den Elastizitätskoeffizienten desselben nicht überschreiten. Das bedeutet, daß ab bestimmter Materialstärken keine Biegung des Bandes, bzw. der kalandrierten Platte nach dem Verlassen des Ausgangsspaltes des Kalanders mehr zulässig ist.

In einer erfindungsgemäßen Lösung der der Erfindung zugrundeliegenden Aufgabe sind vier spezifische Verfahrensschritte relevant. 1. Eine nahezu unmittelbare Eingabe der Schmelze aus der Extruderdüse in den Walzenspalt bzw. unmittelbare Kontaktnahme der Schmelze mit der auf Schmelzenwärme temperierten Gravurfläche der auf der Zylinderwalze aufgespannten Gravurhülse. 2. Die Bereitstellung der Schmelzenwärme an allen Berührungsteilen der Schmelze im Walzenspalt. 3. Die Steuerung des Wärmeentzuges von der formgebenden Walze unterschiedlich von dem Wärmeentzug auf der glättenden Bandseite. 4. Die Anpassung des Biegewinkels des aus dem Walzenspalt austretenden fertigen Produktes an die Stärke und das Elastizitätsmodul desselben.

Die erfindungsgemäße Vorrichtung zur Durchführung der vier erfindungsgemäßen Verfahrensschritte unterscheidet sich in der Konstruktion und im Prinzip nur wenig von den zweckgleichen Einrichtungen gemäß dem Stande der Technik. Fortschrittlich und neu ist die Maßnahme, die mit einer formgebenden Gravurhülse (Vließ) umspannte Walze aus einem Stahlzylinder zu bilden, dessen Wandstärke von der Wärmekapazität seiner Masse bestimmt wird.

Erfindungsgemäß wird die Gravurhülse vor der Berührung mit der Schmelze und im Bereich derselben auf Schmelzentemperatur aufgeheizt, um die Wärme nach der Passage des Walzenspaltes an den Stahlzylinder der Zylinderwalze abzugeben. Am Ausgangsspalt des erfindungsgemäßen Kalanders ist ein schwenkbarer Glätt- und Kühltisch vorgesehen, mit dem der Problematik der Biegewinkels des abgeführten kalandrierten Materials begegnet wird.

Die Ausfüllung der scharfkantigen Täler in der Gravurhülse und die Verhinderung des Teilrückflusses der Kunststoffschmelze im Erkaltungsprozeß ist das Hauptkriterium des erfindungsgemäßen Verfahrens, welches in der Vorrichtung zur Ausübung desselben eine zweckerfüllende Beachtung erfährt. Im Prinzip kann mit dem erfindungsgemäßen Verfahren und der Vorrichtung zur Durchführung desselben an Stelle der extrudierten Schmelze auch ein auf Schmelztemperatur gebrachtes, vorgefertigtes Kunststoffband zum erfindungsgewollten Produkt verarbeitet werden.

Auf den Zeichnungen sind Verfahrensbedingungen und zwei Ausführungsbeispiele der erfindungsgemäßen Vorrichtung zur Durchführung des Verfahrens der kontinuierlichen Herstellung von endlosen, optisch abbildungsfähigen Folien, Bahnen und Platten aus Kunststoffen dargestellt:

Es zeigen:

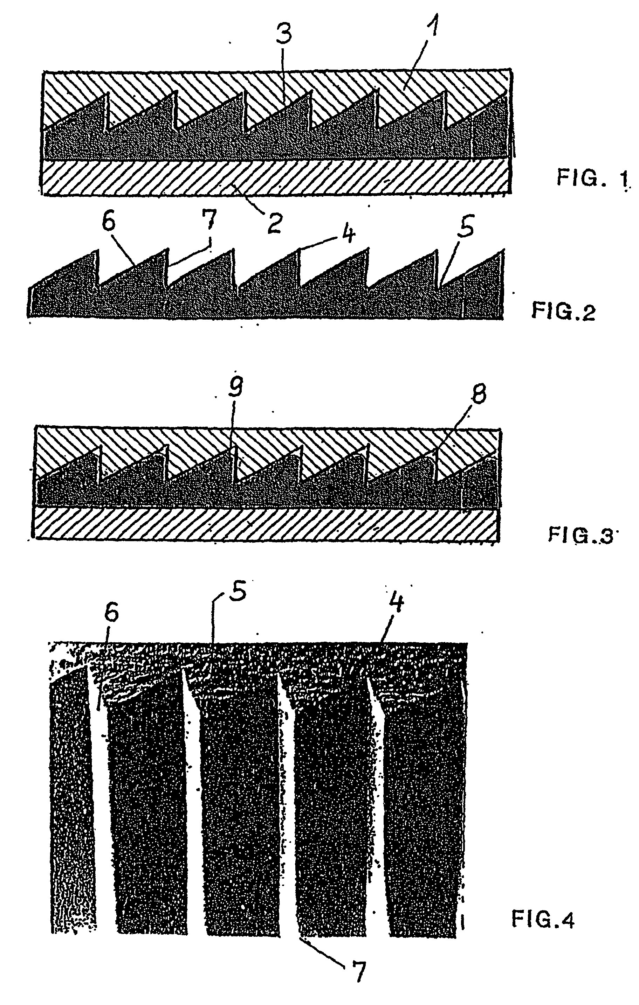

- Fig. 1: einen vergrößerten Profilabschnitt einer umlenkenden Prismenscheibe mit vollständiger Ausprägung der Prismenkanten in der prägenden Matrize.
- Fig. 2: einen vergrößerten Profilabschnitt einer umlenkenden Prismenscheibe mit vollständiger Ausprägung der Prismenkanten.
- Fig. 3: einen vergrößerten Profilabschnitt einer umlenkenden Prismenscheibe mit unvollständiger Ausprägung der Prismenkanten in der prägenden Matrize.
- Fig. 4: ein vergrößerndes Foto einer, im Preßverfahren hergestellten, linearen, ablenkenden Prismenscheibe.
- Fig. 5: eine Schemazeichnung eines Ausführungsbeispiels der erfindungsgemäßen Vorrichtung zur kontinuierlichen Herstellung von endlosen, optisch abbildungsfähigen Folien, Bahnen und Platten.
- Fig. 6 bis 10: Schemazeichnungen eines Ausführungsbeispiels der erfindungsgemäßen Vorrichtung entsprechend Fig. 5 in unterschiedlichen Funktionspositionen.
- Fig. 11: eine Schemazeichnung eines zweiten Ausführungsbeispiels der erfindungsgemäßen Vorrichtung.
- Fig. 12: eine Schemazeichnung eines dritten Ausführungsbeispiels der erfindungsgemäßen Vorrichtung.

Die optische Qualität zirkularer wie linearer Fresnellinsen aller Geometrien einschließlich zirkularer und linearer Prismenplatten aus PMMA und sonstigen Plasten ist maßgeblich von der Schärfe der Hochkante 4 der Prismen bestimmt, die im Gegensatz zur Tiefkante 5 der Prismen nur mit besonderen Maßnahmen von der formgebenden Matrize abzubilden ist. Im Falle ebener Fresnellinsen handelt es sich bei dieser Matrize um die Flachmatrize 1.

Die wirksamste solcher Maßnahmen ist die Erwärmung des Plastmaterials zwischen der Flachmatrize 1 und der Spiegelplatte 2 auf die Schmelztemperatur des Kunststoffes bei Anwendung eines Preßdrucks von mindestens 20 kN/cm². Zur Entnahme der Prismenscheibe 3 aus der Presse muß das Preßpaket, bestehend aus Matrize, Prismenscheibe 3 und Spiegelplatte 2 unter Einhaltung des Preßdruckes bis auf die Erhärtungstemperatur der Prismenscheibe 3 abgekühlt werden. Bei Vernachlässigung dieser Maßnahmen entstehen durch den Abbruch des auch im Spritzgießverfahren zur Verhinderung von Einfallstellen unerläßlichen Nachdruckes Rückbildungen der Hochkanten, in Form von Rundungen 9 und Bildung der Hohlräume 8 in der Matrize. Bei der Öffnung des Preßpaketes vor der vollständigen Aushärtung der Prismenscheibe 3 kommt es nicht nur zu den Rundungen 9 der Hochkanten 4 der Prismen, sondern auch zu Unebenheiten der Prismenflanken 6 und 7.

Eine mit solchen Defekten behaftete Prismenscheibe ist praktisch kaum verwendbar, indessen hochwertige, im Preßverfahren hergestellte Prismenscheiben wegen zu hoher Herstellungskosten nur in beschränkten Bereichen zum Einsatz kommen.

Mit dem erfindungsgemäßen Verfahren und der Vorrichtung zur Durchführung des Verfahrens soll eine wirtschaftliche Produktion von optisch abbildungsfähigen Folien, Bahnen und Platten aus Kunststoffen erreicht werden.

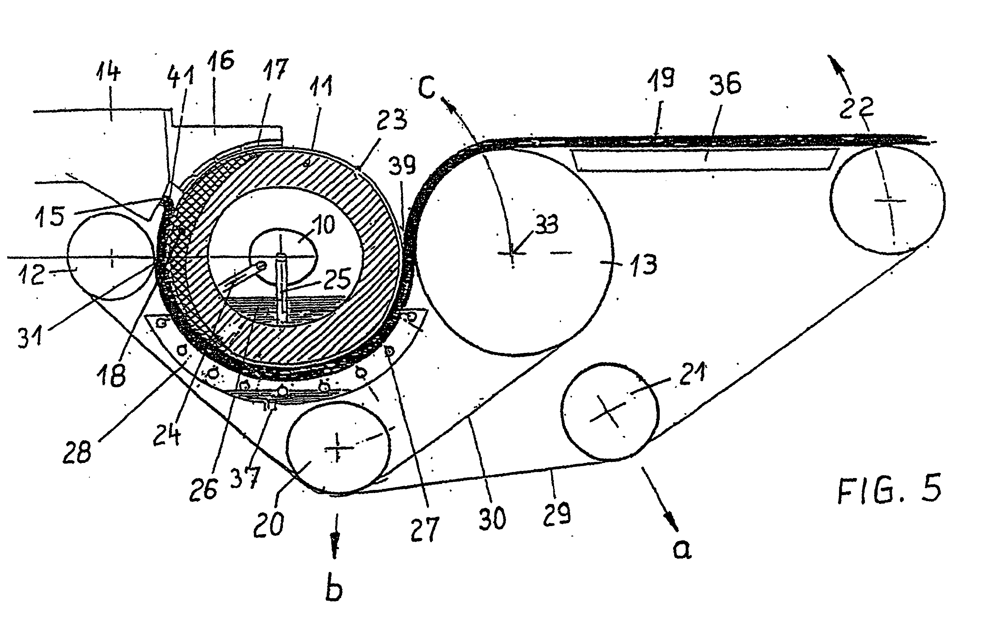

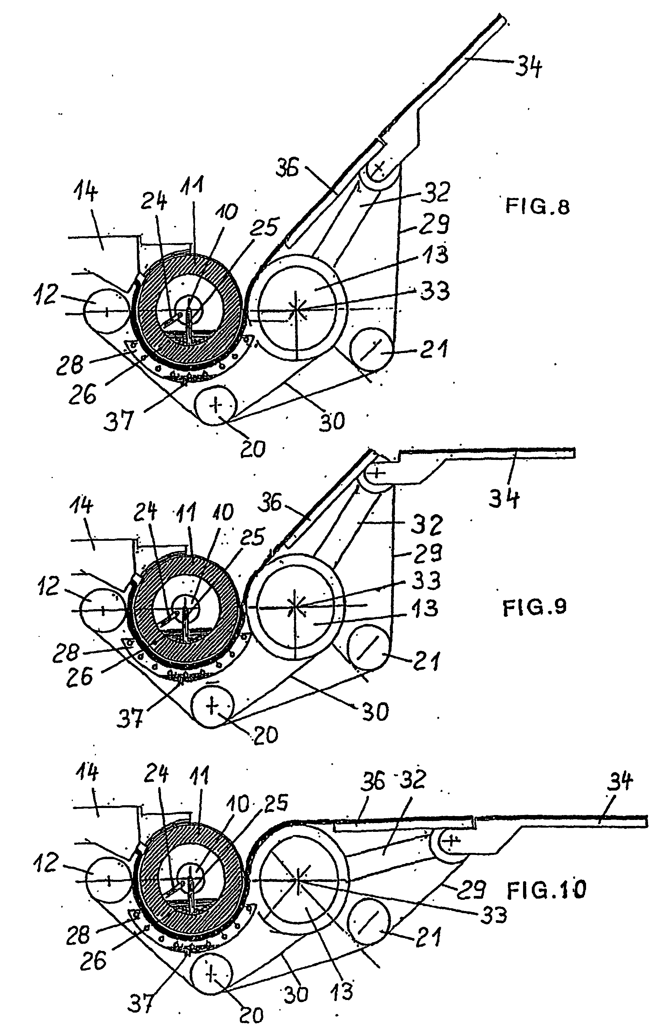

Die Figuren 5 bis 10 zeigen Ausführungsbeispiele der erfindungsgemäßen Vorrichtung in unterschiedlichen Funktionspositionen entsprechend der Stärke (Dicke) der herzustellenden Folien, Bahnen oder Platten. Zur Kennzeichnung der erfindungsgemäßen Verfahrensschritte dient insbesondere die Schemazeichnung Fig. 5. Die Masse und die Wandstärke der Zylinderwalze 11 in Abhängigkeit vom Durchmesser derselben ist ausschlaggebend zur wirtschaftlichen Nutzung des erfindungsgemäßen Verfahrens, bei dem die Kunststoffschmelze 41, über die Breitschlitzdüse 15 den Extruder 14 verlassend, auf die Gravur der auf Schmelzentemperatur gebrachten Gravurhülse 23 aufgebracht wird. Vorzugsweise wird hier die Kunststoffschmelze 41 aus der Breitschlitzdüse 15 mit einem Mindestabstand von zweifacher Schlitzhöhe der Breitschlitzdüse 15 auf die zylinderwalze 11 abgegeben.

Heizkörper 17 hoher Leistung sind kurz vor der Extruderdüse in der Heizhaube 16 installiert.

Der relevante thermische Vorgang ist unter beispielhafter Vorgabe folgender Parameter zu erklären: Zielsetzung ist die endlose Herstellung eines Produktes 19 aus PMMA mit der Stärke bzw. Dicke von 1 mm. Es wird eine Produktionsleistung von 5 m/min angenommen. Der Durchmesser der Zylinderwalze 11 beträgt 1000 mm. Entsprechend dem Umfang der Zylinderwalze 11 von 3,14 m macht dieselbe 1,5 Umdrehungen/min. Die Kunststoffschmelze 41 umschlingt, gehalten von dem Glättband 29, eine Strecke von 1,85 m der Zylinderwalze 11.

Damit ist die Temperatur der Kunststoffschmelze ab dem Austritt aus der Breitschlitzdüse 15 in einem Zeitraum von 36 Sekunden von ca. 200° auf 90° abzusenken, und das geschieht erfindungsgemäß dadurch, daß die Temperatur der Zylinderwalze 11 auf einem Wert unter 80° gehalten wird, indessen die auf der Zylinderwalze 11 aufgespannte Gravurhülse 23 auf einer kurzen Strecke der Walzenumdrehung mittels intensiver Bestrahlung auf ca. 200° gebracht wird.

So entsteht auf der rotierenden Zylinderwalze 11 eine sich kontinuierlich auf- und abbauende Heizzone 18.

Mit dem Kühlsystem gemäß dem Ausführungsbeispiel soll eine unterschiedliche Kühlung zwischen den geprägten Flächen und der am Glättband 29 anliegenden Fläche erreicht werden. Die Hochkanten 4 der geprägten Prismen sollen erstarren, bevor die gesamte Masse der Kunststoffschmelze 41 die Erstarrungstemperatur erreicht.

Dieser Temperaturunterschied hat zur Folge, daß bei der Streckung des Produktes aus dem Biegungswinkel um die Zylinderwalze 11 in die Gerade, bzw. in die entgegengesetzte Biegung der Ablaufwalze 13 eine Deformationsgefahr für die geprägten Strukturen aufgehoben oder entscheidend gemindert wird.

Das erfindungsgemäße Ausführungsbeispiel der Kühleinrichtung hat zwei Kühlkreise.

Das ist einmal die Kühlwasserzuleitung 24 und die Kühlwasserableitung 25 durch die Walzenachse 10. Der Wasserstand des Kühlwassers 26 im Innenraum der Zylinderwalze 11 ist regulierbar, wie auch die Durchflußmenge.

Der zweite, regulierbare Kühlkreis betrifft die Außenkühlung, wobei Kühlwasserdüsen 27 gegen die Außenseite des Glättbandes 29 gerichtet sind, deren Wasser in einer Wanne 28 aufgenommen wird.

Daß an relevanten Positionen thermischer Parameter Temperaturmeßstellen vorzusehen sind, ist selbstverständlich.

Bei dem Eingang der Kunststoffschmelze 41 in den Walzenspalt 31 kann eine dosierte Wulstbildung derselben vorteilhaft sein, wozu jedoch eine von dem Wulst selbst gesteuerte Größenhaltung durch Änderung der Extruderleistung oder der Umdrehungsgeschwindigkeit der Zylinderwalze 11 erforderlich ist.

Die Leistungsfähigkeit des erfindungsgemäßen Verfahrens auf eine optimale Höhe erreicht die verfahrensgemäße Vorrichtung dadurch, daß eine Messung der Temperatur des Produkts 19 am Ausgangsspalt 39 die Umdrehungsgeschwindigkeit der Zylinderwalze 11 regelt.

Eine thermodynamische Beweisführung zum Ablauf der erfindungsgemäßen Verfahrensfunktion würde den Rahmen der Patentanmeldung überschreiten und wird gegebenenfalls mit einer praktischen Beweisführung untermauert.

In der erfindungsgemäßen Vorrichtung kann der Umschlingungswinkel der erstarrenden Schmelze durch die Verlagerung der Drehachse der Ablaufwalze 13 in Pfeilrichtung C vergrößert werden.

Das Glättband 29, welches auf der Innenseite spiegelpoliert ist, umschlingt einen Teil des Umfangs der Zylinderwalze 11 und läuft dann über die Ablaufwalze 13 zur Umlenkwalze 22 und überläuft die Bandleitwalze 21 und die Spannwalze 20, um über die Einlaufwalze 12 wieder zum teilweisen Umlauf um die Zylinderwalze 11 zu gelangen.

Innerhalb des Glättbandumlaufs ist noch ein Druckband 30 vorgesehen, welches zur Erhaltung des Anpreßdruckes der Schmelze an die Gravurhülse 23 der Zylinderwalze 11 eine stärkere Spannung aufzuweisen hat als das weit umlaufende Glättband 29.

Die Abbiegung der erstarrten Kunststoffschmelze 41 über die Ablaufwalze 13 ist materialabhängig nur bis zu bestimmten Produktstärken möglich.

Mit der erfindungsgemäßen Einrichtung sollen jedoch Produktstärken mindestens bis 10 mm hergestellt werden können, bei denen eine zweite Biegung nach Verlassen der Zylinderwalzenrundung nicht mehr ohne Schädigung der Prismenstrukturen möglich ist.

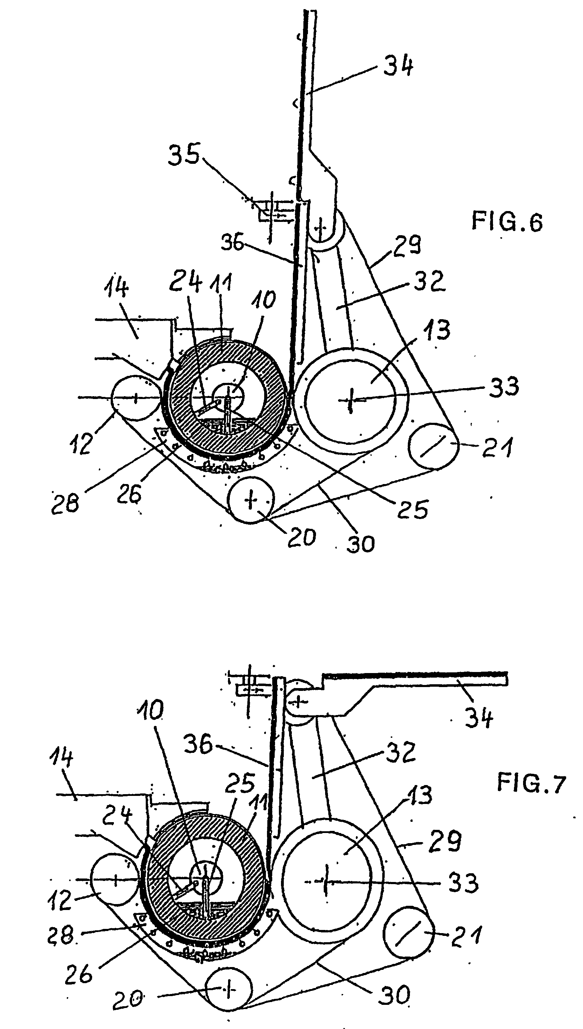

Erfindungsgemäß ist in diesem Falle vorgesehen, daß der Kühltisch 36 um den Drehpunkt 33 der Ablaufwalze 13 drehend in die Senkrechte (Fig. 6) gebracht wird. Das Produkt 19 steigt jeweils bis auf die Höhe des Ablagetisches 34 und wird mit einer mitgehenden Säge 35 von der Nachfolge getrennt. Ohne Unterbrechung des Produktionsprozesses wird der Ablagetisch 34 mit dem Produktabschnitt in die Waagerechte (Fig. 7) gebracht und abgelagert. Der Ablagetisch 34 gelangt wieder in die Senkrechtstellung und nimmt das nachfahrende Produkt wieder in vorgesehenen Halterungen auf.

Der Stärke und der Biegsamkeit (Rückbildungsfähigkeit) des Produktes entsprechend wird die erfindungsgemäße Vorrichtung, das heißt die Winkelstellung des Ablauftisches und des Ablagetisches 34, ausgerichtet, wozu die Achse der Umlenkwalze 22 mit dem Drehpunkt 33 mittels des Schwenkarmes 32 drehbar verbunden ist.

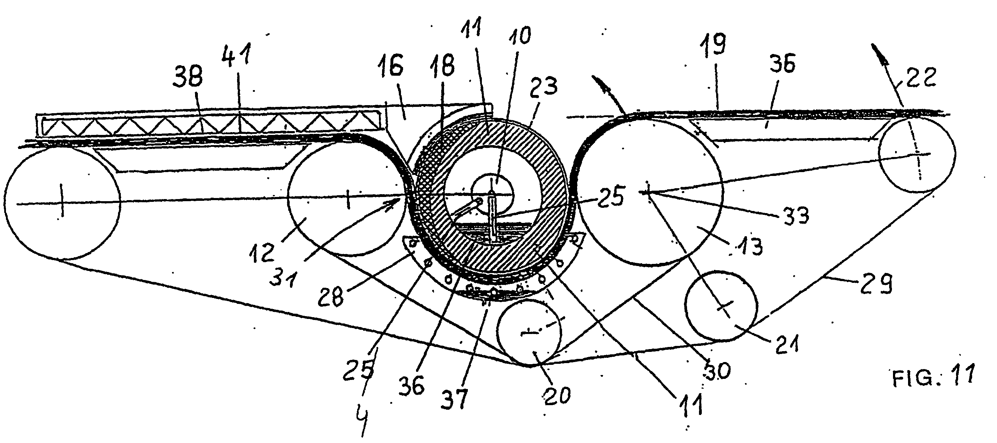

Das erfindungsgemäße Verfahren und die Vorrichtung zur Durchführung ist auch zur Herstellung endloser, optisch abbildungsfähiger Folien, Bahnen und Platten aus vorgefertigtem Halbmaterial anwendbar, indem gemäß Fig. 11 das Halbmaterial unter einer Schmelzhaube 38 in eine Kunststoffschmelze 41 umgewandelt wird und in den Walzenspalt 31 gelangt, wo sie der gleichen Behandlung unterzogen wird wie die Kunststoffschmelze 41 aus der Breitschlitzdüse 15 des Extruders 14.

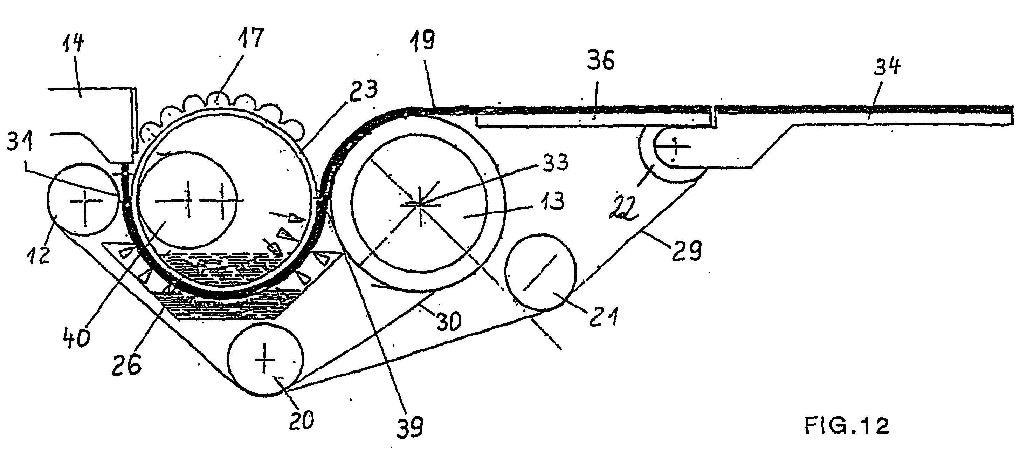

Das dritte Ausführungsbeispiel der erfindungsgemäßen Vorrichtung zur Durchführung des Verfahrens der Herstellung des erfindungsgemäßen Produktes nach Fig. 12 unterscheidet sich von den Ausführungsbeispielen entsprechend den Fig. 5 bis 11 ausschließlich im Bereich der Maßnahmen zur optimalen Temperatursteuerung im Prozeß der Formgebung optisch abbildungsfähiger Folien, Bahnen und Platten in der Weise, daß die Gravurhülse 23 ohne tragende Zylinderwalze, mit einer oder mehreren Stützwalzen 40 den Druck am Walzenspalt 31 aufnehmen und entsprechend ihrer geringen Masse mit wirtschaftlich günstigem Zeitparameter die jeweilige Schmelzwärme aufnehmen und wieder abgeben kann. Indessen die Gravurhülse 23 im ersten Ausführungsbeispiel der Vorrichtung zur Ausübung des Verfahrens mit geringer Wandstärke auskommt, wird im dritten Ausführungsbeispiel die Verwendung eines dünnwandigen Stahlzylinders mit einer galvanisch aufgebrachten Kupferschicht vorgeschlagen, in die die Gravur zur Abformung optisch abbildungsfähiger Produkte 19 eingebracht ist.

### Bezugszeichenaufstellung:

- 1: Flachmatrize
- 2: Spiegelplatte
- 3: Prismenscheibe
- 4: Hochkante
- 5: Tiefkante
- 6: Prismenflanke (brechend)
- 7: Prismenflanke (neutral)
- 8: Hohlraum
- 9: Rundung
- 10: Walzenachse
- 11: Zylinderwalze
- 12: Einlaufwalze
- 13: Ablaufwalze
- 14: Extruder
- 15: Breitschlitzdüse
- 16: Heizhaube
- 17: Heizkörper
- 18: Heizzone
- 19: Produkt
- 20: Spannwalze
- 21: Bandleitwalze
- 22: Umlenkwalze
- 23: Gravurhülse
- 24: Kühlwasserzuleitung
- 25: Kühlwasserableitung
- 26: Kühlwasser
- 27: Kühlwasserdüse
- 28: Wanne
- 29: Glättband
- 30: Druckband
- 31: Walzenspalt
- 32: Schwenkarm
- 33: Drehpunkt
- 34: Ablagetisch
- 35: Säge
- 36: Kühltisch
- 37: Kühlwasserablauf
- 38: Schmelzhaube
- 39: Ausgangsspalt
- 40: Stützwalze
- 41: Kunststoffschmelze

## Patentansprüche

1. Verfahren zur kontinuierlichen Herstellung optisch abbildungsfähiger Folien, Bahnen und Platten aus Kunststoffen mittels einer flächig vorgeformten Kunststoffschmelze (41) zur Weiterführung in einen Kalander, dessen formgebende, gravurtragende Zylinderwalze (11) teilweise von einem Glättband (29) umspannt ist, wobei die Kunststoffschmelze (41) in dem Walzenspalt (31) zwischen die formgebende, gravurtragende Zylinderwalze (11) und das Glättband (29) gebracht und in dem so gebildeten Formungsraum durch Wärmeentzug erkaltend profiliert wird, **dadurch gekennzeichnet, daß** in dem Walzenspalt (31) zwischen Zylinderwalze (11) und Glättband (29) auf der Gravurfläche der Zylinderwalze (11) Schmelztemperatur erzielt wird, und daß
die Kunststoffschmelze (41) unmittelbar auf die so aufgeheizte Zylinderwalze (11) gegeben wird.

2. Verfahren nach Anspruch 1, **dadurch gekennzeichnet, daß** der Wärmeentzug auf dem Weg der Kunststoffschmelze (41) um die Zylinderwalze (11) kontrolliert auf der der Zylinderwalze zugewandten Seite des erstarrenden Schmelzenbandes in einem derart stärkeren Maße stattfindet als auf der dem Glättband (29) zugewandten glatten Seite, daß die Kunststoffschmelze in den Hochkanten (4) der Prismen ausgehärtet ist, bevor das Materialband als fertiges Produkt 19 den Ausgangsspalt (39) verläßt.

3. Verfahren nach Anspruch 1 oder 2, **dadurch gekennzeichnet, daß** das zum Produkt (19) erstarrte Schmelzenband, seiner Stärke und seinen mechanischen Eigenschaften entsprechend, nach dem Verlassen des Ausgangsspaltes (39) in gestreckter oder entgegengesetzt abbiegender Richtung zur Lagerungsform oder Weiterverarbeitung gebracht wird.

4. Verfahren nach einem der Ansprüche 1 bis 3, **dadurch gekennzeichnet, daß** mit der Schmelztemperatur im Bereich der auftreffenden Kunststoffschmelze (41) auf die Gravurseite der Zylinderwalze (11) nicht die gesamte, sich drehende Masse der Zylinderwalze (11) betroffen ist, sondern nur eine stehende Heizzone (18) in derselben, wobei ein Zuwachs der Wärme in der Zylinderwalzen-Masse durch eine Kühleinrichtung (24,25,26;27,28) verhindert wird, die von der Kunststoffschmelze (41) zeitlich nach dem Eintrag in den Walzenspalt (31) durchlaufen wird.

5. Verfahren nach mindestens einem der Ansprüche von 1 bis 4, **dadurch gekennzeichnet, daß** das aus dem Kalander ausfahrende Produkt (19) mit einer der Fahrgeschwindigkeit des Produkts (19) angepaßten Querbewegung einer Säge (35) abgelängt wird.

6. Verfahren nach einem der Ansprüche 1 bis 5, **dadurch gekennzeichnet, daß** die flächig vorgeformte Kunststoffschmelze (41) in einem Extruder (14) zubereitet und aus dem Extruder über eine Breitschlitzdüse (15) unmittelbar auf die Zylinderwalze (11) gegeben wird.

7. Verfahren nach einem der Ansprüche 1 bis 5, **dadurch gekennzeichnet, daß** die flächig vorgeformte Kunststoffschmelze (41) aus Halbmaterial zubereitet wird, welches unter einer Schmelzhaube (38) aufgeschmolzen und anschließend als Kunststoffschmelze (41) unmittelbar auf die Zylinderwalze (11) gegeben wird.

8. Vorrichtung zur Durchführung des Verfahrens nach einem der Ansprüche 1 bis 6, bestehend aus einer umspannten Zylinderwalze (11) mit außenliegender Gravurseite und einem positionierbaren Extruder (14) mit Breitschlitzdüse (15) und einem die Zylinderwalze (11) teilweise umschlingendem Glättband (29) und mit Heizund Kühleinrichtungen, wobei die öffnungsfläche der Breitschlitzdüse (15) längsparallel zur Fläche der Zylinderwalze (11) bzw. zur Fläche der Gravurwalze (23) abstandsvariabel einstellbar ist. linderwalze (11) bzw. zur Fläche der Gravurwalze (23) abstandsvariabel einstellbar ist.

9. Vorrichtung nach Anspruch 8, **dadurch gekennzeichnet, daß** ein Heizaggregat (16) kurz vor dem Öffnungsspalt der Breitschlitzdüse angebracht ist.

10. Vorrichtung nach Anspruch 8 oder 9, **dadurch gekennzeichnet, daß** der Durchmesser der Ablaufwalze (13) mindestens dem Durchmesser der Zylinderwalze (11) entspricht und daß eine Drehachse der Ablaufwalze (13) in Pfeilrichtung C zur Änderung der Umschlingungsstrecke des Glättbandes (29) zu verlagern ist.

11. Vorrichtung nach Anspruch 8 oder 9, **dadurch gekennzeichnet, daß** der Abstand der Ablaufwalze (13) von der Walzenachse (10) veränderbar ist.

12. Vorrichtung nach einem der Ansprüche 8 bis 11, **dadurch gekennzeichnet, daß** an der Achse der Ablaufwalze (13) ein Kühltisch (36) angelenkt ist, der mit dem Schwenkarm (32) in verschiedene Winkelstellungen zu bringen ist, wobei an dem Kühltisch (36), zusammen mit dem Lager der Umlenkwalze (22) ein abwinkelbarer Ablagetisch (34) angelenkt ist.

13. Vorrichtung nach einem der Ansprüche 8 bis 12, **dadurch gekennzeichnet, daß** in die Walzenachse (10) der Zylinderwalze (11) eine Kühlwasserzu- und eine Kühlwasserableitung (24;25) eingebracht sind, wobei die, durch die Zylinderwalze (11) führende Kühlwasserzuleitung (24) mit einer Spritzdüsengalerie besetzt ist und wobei das im Innenraum der Zylinderwalze (11), auf gesteuerte Höhe sich ansammelnde Kühlwasser (26) durch ein Saugrohr der Kühlwasserableitung (25) abgesogen wird.

14. Vorrichtung nach einem der Ansprüche 8 bis 12, **dadurch gekennzeichnet, daß** das endlose Glättband (29) mit feder- oder hydraulikunterstützter Bewegung der Bandleitwalze (21) in Pfeilrichtung a gespannt ist und keinen Eigendruck auf die Umschlingungsfläche der Zylinderwalze (11) ausübt, wobei in einem inneren Umlauf, die Umlenkwalze (22) nicht tangierend, ein Druckband (30) vorgesehen ist, dessen Spannung mit feder- oder hydraulikunterstützter Bewegung der Spannwalze (20) in Pfeilrichtung b erzeugt wird.

15. Vorrichtung nach einem der Ansprüche 8 bis 14, **dadurch gekennzeichnet, daß** auf der Umschlingungsstrecke der Stahlbänder um die Zylinderwalze (11) Kühlwasserdüsen (27) zur Spritzkühlung der Stahlbänder positioniert sind, deren Kühlwasser in einer Kühlwasserwanne (28) gesammelt und durch einen Kühlwasserablauf (37) abgeführt wird.

16. Vorrichtung zur Durchführung des Verfahrens nach einem der Ansprüche 1 bis 5 oder 7, zur kontinuierlichen Herstellung optisch abbildungsfähiger Folien, Bahnen und Platten aus Kunststoffen mittels Zubereitung einer Kunststoffschmelze (41) aus vorgefertigten Kunststoffhalbzeugen unter einer Schmelzhaube (38) und Weiterführung in den Walzenspalt (31) eines Kalanders mit einer teilweise von einem Stahlband umschlungenen Zylinderwalze (11) mit Gravurfläche, **dadurch gekennzeichnet, daß** die Schmelzhaube (38) zur Herstellung unterschiedlicher Temperaturen in eine Heizhaube (16) mündet bzw. an einen Heizkörper (17) zur Erwärmung einer Heizzone (18) der Zylinderwalze (11) angeschlossen ist.

17. Vorrichtung nach mindestens einem der Ansprüche 10 bis 16, **dadurch gekennzeichnet, daß** die Zylinderwalze (11) im wesentlichen nur aus einer Gravurhülse (23) besteht, in der eine beheizbare Stützwalze (40) zur Aufnahme des Spaltdrucks und zur linearen, achsenparallelen Aufheizung der Gravurhülse (23) im Bereich des Walzenspalts (31) angeordnet ist.

## Claims

1. Method for the continuous production of films, webs and sheets, which consist of synthetic materials and are capable of producing optical images, by means of a synthetic material melt (41), which is preformed in a planar manner, for conveyance into a calendar, of which the shaping, engraving cylinder roller (11) is partially surrounded by a smoothing strip (29), wherein the synthetic material melt (41) is moved in the roller gap (31) between the shaping, engraving cylinder roller (11) and the smoothing strip (29) and is profiled in the thus formed moulding space in a cooling manner by means of heat abstraction, **characterised in that** in the roller gap (31) between the cylinder roller (11) and the smoothing strip (29) a melting temperature is reached on the engraving surface of the cylinder roller, and that the synthetic material melt (41) is passed directly to the cylinder roller (11) heated up in this manner.

2. Method as claimed in claim 1, **characterised in that** the heat abstraction along the synthetic material melt (41) around the cylinder roller (11) is performed in a controlled manner on the side of the solidifying melt strip, facing the cylinder roller, to a greater extent than on the smooth side facing the smoothing strip (29), that the synthetic material melt is cured in the upright edges (4) of the prisms, before the material strip leaves the output gap (39) as a finished product 19.

3. Method as claimed in claim 1 or 2, **characterised in that** according to its strength and mechanical properties, the melt strip which is solidified to form the product (19) is conveyed after leaving the output gap (39) in a straight or oppositely-turning direction to the storage mould or for further processing.

4. Method as claimed in any one of claims 1 to 3, **characterised in that** in the region where the synthetic material melt (41) impinges on to the engraving side of the cylinder roller (11) it is not the entire, rotating mass of the cylinder roller (11) which is affected by the melting temperature, but rather only a stationary heating zone (18) therein, wherein the heat in the cylinder roller mass is prevented from increasing by means of a cooling device (24, 25, 26; 27, 28), through which the synthetic material melt (41) passes in terms of time after introduction into the roller gap (31).

5. Method as claimed in at least one of claims 1 to 4, **characterised in that** the product (19) issuing out of the calender is cut to length by means of a transverse movement of a saw (35) adapted to the travel speed of the product (19).

6. Method as claimed in any one of claims 1 to 5, **characterised in that** the synthetic material melt (41) which is preformed in planar manner is prepared in an extruder (14) from where it is passed via a broad slit die (15) directly on to the cylinder roller (11).

7. Method as claimed in any one of claims 1 to 5, **characterised in that** the synthetic material melt (41) which is preformed in a planar manner is prepared from semi-finished material which is melted under a melting hood (38) and is subsequently passed as a synthetic material melt (41) directly on to the cylinder roller (11).

8. Device for the purpose of performing the method as claimed in any one of claims 1 to 6, consisting of an encompassed cylinder roller (11) having an outer engraving side and a positionable extruder (14) having a broad slit die (15) and a smoothing strip (29), which partially loops around the cylinder roller (11), and having heating and cooling devices, wherein the aperture surface of the broad slit die (15) can be adjusted in a longitudinally parallel manner with respect to surface of the cylinder roller (11) or can be adjusted in a distance-variable manner with respect to surface of the engraving side (23).

9. Device as claimed in claim 8, **characterised in that** a heating unit (16) is provided just in front of the aperture gap of the broad slit die.

10. Device as claimed in claim 8 or 9, **characterised in that** the diameter of the delivery roller (13) corresponds at least to the diameter of the cylinder roller (11) and that an axis of rotation of the delivery roller (13) is to be displaced in the arrow direction C for the purpose of altering the looping path of the smoothing strip (29).

11. Device as claimed in claim 8 or 9, **characterised in that** the distance of the delivery roller (13) from the roller axle (10) can be varied.

12. Device as claimed in any one of claims 8 to 11, **characterised in that** a cooling table (36) is articulated to the axle of the delivery roller (13) and can be moved by means of the pivot arm (32) into various angular positions, wherein a delivery table (34), which can be bent, is articulated to the cooling table (36) together with the bearing of the deflecting roller (22).

13. Device as claimed in any one of claims 8 to 12, **characterised in that** a cooling water supply line and cooling water discharge line (24; 25) are introduced into the roller axle (10) of the cylinder roller (11), wherein the cooling water supply line (24) passing through the cylinder roller (11) is provided with an injection nozzle gallery, and wherein the cooling water (26) which accumulates in the inner chamber of the cylinder roller (11) to a controlled level is drawn off by a suction pipe to the cooling water discharge line (25).

14. Device as claimed in any one of claims 8 to 12, **characterised in that** the endless smoothing strip (29) is tensioned by means of a resiliently or hydraulically supported movement of the strip guiding roller (21) in the arrow direction a and does not exert any intrinsic pressure upon the looping surface of the cylinder roller (11), wherein on an inner rotary cycle, not tangential to the deflecting roller (22), a pressure strip (30) is provided which is tensioned by means of a resiliently or hydraulically supported movement of the tensioning roller (20) in the arrow direction b.

15. Device as claimed in any one of claims 8 to 14, **characterised in that** on the looping path of the steel strips around the cylinder roller (11) there are positioned cooling water nozzles (27) for the injection-cooling of the steel strips, of which the cooling water is collected in a cooling water vessel (28) and is carried off through a cooling water outlet (37).

16. Device for the purpose of performing the method as claimed in any one of claims 1 to 5 or 7 for the continuous production of films, webs and sheets which consist of synthetic materials and are capable of producing optical images, by preparing a synthetic material melt (41) from prefabricated semi-finished synthetic material products under a melt hood (38) and by conveying same into the roller gap (31) of a calender having a cylinder roller (11), around which a steel strip partially loops, with an engraving surface, **characterised in that** for the purpose of producing different temperatures the melt hood (38) issues into a heating hood (16) or is connected to a heating body (17) for the purpose of heating a heating zone (18) of the cylinder roller (11).

17. Device as claimed in at least one of claims 10 to 16, **characterised in that** the cylinder roller (11) consists substantially only of one engraving sleeve (23), in which there is disposed a heatable support roller (40) for absorbing the gap pressure and for heating the engraving sleeve (23) in a linear, axis-parallel manner in the region of the roller gap (31).

## Revendications

1. Procédé pour fabriquer en continu des films, bandes et plaques en matière plastique pour reproduction par voie optique, à l'aide d'une matière plastique en fusion (41) préformée plane à transférer dans une calandre dont le cylindre de formage (11) portant la gravure est partiellement entouré par une bande de lissage (29), étant précisé que la matière plastique en fusion (41) est amenée dans l'espace (31) entre le cylindre de formage (11) portant la gravure et la bande de lissage (29) et est profilée en refroidissant, par absorption de chaleur, dans l'espace de formage ainsi défini,
**caractérisé en ce que** dans l'espace (31) entre le cylindre (11) et la bande de lissage (29), on obtient une température de fusion sur la surface de gravure dudit rouleau (11),
et **en ce que** la matière plastique en fusion (41) est appliquée directement sur le cylindre (11) ainsi chauffé.

2. Procédé selon la revendication 1, **caractérisé en ce que** l'absorption de chaleur a lieu de manière contrôlée sur le trajet de la matière plastique en fusion (41) autour du cylindre (11), en étant plus forte sur le côté de la bande en fusion en cours de solidification tourné vers le cylindre que sur le côté lisse tourné vers la bande de lissage (29), pour que la matière plastique en fusion ait durci sur les bords (4) des prismes avant que la bande de matériau ne quitte la fente de sortie (39) sous la forme d'un produit fini (19).

3. Procédé selon la revendication 1 ou 2, **caractérisé en ce que** la bande en fusion solidifiée pour former le produit (19), après avoir quitté la fente de sortie (39), prend sa forme de stockage ou subit d'autres traitements en ligne droite ou suivant une courbure en sens inverse, suivant son épaisseur et ses caractéristiques mécaniques.

4. Procédé selon l'une des revendications 1 à 3, **caractérisé en ce que** la température de fusion régnant dans la zone de la matière plastique en fusion (41) qui arrive sur le côté gravure du cylindre (11) ne concerne pas toute la masse en rotation du cylindre (11), mais seulement une zone de chauffage fixe (18) de celui-ci, une augmentation de la chaleur dans la masse de cylindre étant empêchée grâce à un dispositif de refroidissement (24, 25, 26 ; 27, 28) qui est traversé par la matière plastique en fusion (41) après l'entrée de celle-ci, dans le temps, dans l'espace (31).

5. Procédé selon l'une au moins des revendications 1 à 4, **caractérisé en ce que** le produit (19) qui sort de la calandre est tronçonné grâce au mouvement transversal d'une scie (35) qui est adapté à la vitesse de déplacement du produit (19).

6. Procédé selon l'une des revendications 1 à 5, **caractérisé en ce que** la matière plastique en fusion (41) préformée plane est préparée dans une extrudeuse (14) et est appliquée, à la sortie de celle-ci, directement sur le cylindre (11) grâce à une filière plate (15).

7. Procédé selon l'une des revendications 1 à 5, **caractérisé en ce que** la matière plastique en fusion (41) préformée plane est préparée à partir d'un matériau semi-fini qui fond sous un capot de fusion (38) et qui est ensuite appliqué directement sur le cylindre (11) sous la forme de matière plastique en fusion (41).

8. Dispositif pour mettre en oeuvre le procédé selon l'une des revendications 1 à 6, comprenant un cylindre (11) entouré par une bande et pourvu d'un côté gravure extérieur, une extrudeuse positionnable (14) pourvue d'une filière plate (15), une bande de lissage (29) qui est enroulée partiellement sur le cylindre (11), et des dispositifs de chauffage et de refroidissement, la surface d'ouverture de la filière plate (15) étant réglable selon un écartement variable, parallèlement et longitudinalement, par rapport à la surface du cylindre (11) ou à la surface du cylindre de gravure (23).

9. Dispositif selon la revendication 8, **caractérisé en ce qu'**un groupe de chauffage (16) est monté juste avant l'ouverture de la filière plate.

10. Dispositif selon la revendication 8 ou 9, **caractérisé en ce que** le diamètre du cylindre de déroulement (13) correspond au moins au diamètre du cylindre (11), et **en ce qu'**un axe de rotation du cylindre de déroulement (13) doit être déplacé dans le sens de la flèche C pour modifier la distance d'enroulement de la bande de lissage (29).

11. Dispositif selon la revendication 8 ou 9, **caractérisé en ce que** l'écartement entre le cylindre de déroulement (13) et l'axe de cylindre (10) est apte à être modifié.

12. Dispositif selon l'une des revendications 8 à 11, **caractérisé en ce qu'**il est prévu, articulée à l'axe du cylindre de déroulement (13), une table de refroidissement (36) qui peut être amenée avec le bras pivotant (32) dans différentes positions angulaires, une table de réception pliable (34) étant articulée, avec le palier du cylindre de déviation (22), à ladite table de refroidissement (36).

13. Dispositif selon l'une des revendications 8 à 12, **caractérisé en ce qu'**une conduite d'amenée et une conduite d'évacuation d'eau de refroidissement (24 ; 25) sont montées dans l'axe (10) du cylindre (11), la conduite d'amenée (24) qui traverse le cylindre (11) étant garnie d'une rampe d'injecteurs et l'eau de refroidissement (26) qui s'accumule à l'intérieur du cylindre (11) jusqu'à une hauteur commandée étant aspirée par un tube d'aspiration de la conduite d'évacuation (25).

14. Dispositif selon l'une des revendications 8 à 12, **caractérisé en ce que** la bande de lissage sans fin (29) est tendue dans le sens de la flèche a grâce au mouvement, assisté par ressort ou par voie hydraulique, du cylindre de guidage de bande (21) et n'exerce pas de pression propre sur la surface d'enroulement du cylindre (11), étant précisé qu'il est prévu dans un périmètre intérieur une bande de pression (30) qui ne touche pas le cylindre de déviation (22) et dont la tension est produite dans le sens de la flèche b grâce au mouvement, assisté par ressort ou par voie hydraulique, du cylindre tendeur (20).

15. Dispositif selon l'une des revendications 8 à 14, **caractérisé en ce qu'**il est prévu, positionnés sur la distance d'enroulement des bandes métalliques autour du cylindre (11), des injecteurs d'eau de refroidissement (27) qui sont destinés à un refroidissement par projection d'eau des bandes métalliques et dont l'eau de refroidissement est recueillie dans un bac d'eau de refroidissement (28) et évacuée par une décharge d'eau de refroidissement (37).

16. Dispositif pour mettre en oeuvre le procédé selon l'une des revendications 1 à 5 ou 7 pour fabriquer en continu des films, bandes et plaques en matière plastique pour reproduction par voie optique, grâce à la préparation d'une matière plastique en fusion (41), à partir de produits semi-finis en matière plastique préfabriqués, sous un capot de fusion (38), et au transfert de cette matière dans l'espace (31) d'une calandre comportant un cylindre (11) qui est partiellement entouré par une bande métallique et qui présente une surface de gravure, **caractérisé en ce que** le capot de fusion (38) destiné à obtenir des températures différentes débouche dans un capot de chauffage (16) et est relié à un corps de chauffage (17) destiné à chauffer une zone de chauffage (18) du cylindre (11).

17. Dispositif selon l'une au moins des revendications 10 à 16, **caractérisé en ce que** le cylindre (11) ne se compose pratiquement que d'un manchon de gravure (23) dans lequel est disposé un cylindre d'appui chauffant (40) destiné à recevoir la pression exercée au niveau de l'espace (31) et à chauffer linéairement, parallèlement à l'axe, le manchon de gravure (23) dans la zone dudit espace (31).
